**Europäisches Patentamt**

**European Patent Office**

**Office européen des brevets**

(19)

(11) Veröffentlichungsnummer : **0 328 764 B1**

(12) # EUROPÄISCHE PATENTSCHRIFT

(45) Veröffentlichungstag der Patentschrift :
23.10.91 Patentblatt 91/43

(51) Int. Cl.$^5$ : **G01B 17/02**, G01B 7/10,
G01B 7/31, G01B 5/10

(21) Anmeldenummer : **88120708.8**

(22) Anmeldetag : **12.12.88**

(54) **Wanddickenmessvorrichtung für Rohre, Kabelummantelungen und dergleichen, insbesondere aus extrudiertem Kunststoff.**

(30) Priorität : **12.02.88 DE 3804388**

(43) Veröffentlichungstag der Anmeldung :
23.08.89 Patentblatt 89/34

(45) Bekanntmachung des Hinweises auf die
Patenterteilung :
23.10.91 Patentblatt 91/43

(84) Benannte Vertragsstaaten :
**AT BE CH DE ES FR GB GR IT LI LU NL SE**

(56) Entgegenhaltungen :
EP-A- 0 226 073
DE-A- 1 239 484

(56) Entgegenhaltungen :
DE-A- 2 912 996
DE-A- 3 525 946
DE-C- 3 806 301
FR-A- 1 582 215

(73) Patentinhaber : **INOEX GmbH
Innovationen und Ausrüstungen für die
Extrusionstechnik Borweg 27
W-4970 Bad Oeynhausen 1 (DE)**

(72) Erfinder : **Wölfl, Volkmar Rudolf
Topsundernweg 5
W-4973 Vlotho-Valdorf (DE)**

(74) Vertreter : **Cohausz & Florack Patentanwälte
Postfach 14 01 61 Schumannstrasse 97
W-4000 Düsseldorf 1 (DE)**

## Beschreibung

Die Erfindung bezieht sich auf eine Wanddickenmeßvorrichtung für Rohre, Kabelummantelungen und dergleichen, insbesondere aus extrudiertem Kunststoff, mit einem an Meß- und Versorgungsleitungen angeschlossenen Meßkopf, der mittels einer an einem eine Durchlauföffnung für das zu messende Rohr aufweisenden Gestell befestigten Führung um die Durchlauföffnung herum reversierend gelagert ist.

Bei bekannten Wanddickenmeßvorrichtungen, die nach dem Ultraschallprinzip arbeiten, wird der Sensor mit einem Ankoppelmedium, insbesondere Wasser, an das Rohr mittels einer druckbeaufschlagten Anstellvorrichtung an das Rohr angedrückt. Da der Meßkopf wegen der geforderten Messung der Wanddicke über den gesamten Umfang reversierend gelagert ist, sind die Meß- und Versorgungsleitungen mehr oder weniger frei geführt. Bei einer bekannten Vorrichtung ist ein gemeinsam mit dem Meßkopf reversierend bewegter Aufwickelrahmen für die Leitungen vorgesehen. Dieser Aufwickelrahmen führt die Leitungen aber nur im unmittelbaren Bereich der Durchlauföffnung, während die Leitungen im übrigen frei verlaufen. (Sonderdruck aus der Zeitschrift "Kunststoffe 77. Jahrgang 1987/9 Carl Hanser Verlag München, "Automatische Ultraschall-Wanddickenmessung bei der Rohrextrusion" von J.Orzechowski, Bad Oeyenhausen ; Firmendruckschrift der Firma Battenfeld Extrusionstechnik GmbH "Automation of pipe extrusion, Seite 10 und 11).

Bei einer anderen Wanddickenmessung der eingangs genannten Art wird der einen Oszillator aufweisende Meßkopf von einer drehbar gelagerten Hohlwelle getragen, die auch eine Primärwicklung und eine Sekundärwicklung von Hochfrequenztransformatoren trägt. Der Oszillator ist über im Meßkopf und in Bohrungen der Hohlwelle verlegte Kabel mit den auf der Hohlwelle angeordneten Wicklungen verbunden. Meß- und Versorgungsleitungen, die den beweglichen Meßkopf mit einer ortsfesten Meßvorrichtung wie bei dem erstbehandelten Stand der Technik verbinden, sind nicht vorgesehen (DE-AS 1239484).

Der Erfindung liegt die Aufgabe zugrunde, eine Wanddickenmeßvorrichtung zu schaffen, bei der die Meß- und Versorgungsleitungen für den Meßkopf auf ihrer gesamten Länge definiert geführt sind.

Diese Aufgabe wird bei einer Wanddickenmeßvorrichtung der eingangs genannten Art dadurch gelöst, daß die Meß- und Versorgungsleitungen in zwei Führungsketten untergebracht sind, die gegenläufig und zum einen Teil auf einer inneren Führungsbahn und zum anderen Teil auf einer damit verbundenen äußeren Führungsbahn geführt sind, daß die Führungsbahnen auf den inneren und äußeren Mantelflächen eines im wesentlichen die Form eines Kreisringabschnittes aufweisenden Führungskernstückes ausgebildet ist, das konzentrisch zur Durchlauföffnung angeordnet und um diese herum beweglich gelagert ist, und daß die Enden der auf der äußeren Führungsbahn befindlichen Teile der Führungskette an einem Festpunkt der Führung und die Enden der auf der inneren Führungsbahn befindlichen Teile der Führungskette mit dem beweglichen Meßkopf gekoppelt sind.

Bei der Erfindung sind die Meß- und Versorgungsleitungen auf ihrer gesamten Länge zwischen dem Festpunkt am Gestell und dem Anschlußpunkt am beweglichen Meßkopf definiert geführt. Die Führung der Meß- und Versorgungsleitungen und Führungsketten in zwei konzentrischen Lagen nimmt wenig Platz in Anspruch. Darüber hinaus ist das Gewicht gleichmäßig über den Umfang verteilt, so daß für die Verstellung über den gesamten Umfang gleich kleine Kräfte ausreichen. Die Belastungen der Meß- und Versorgungsleitung sind minimal, weil aufgrund der besonderen Führung mittels der Führungsketten keine Spannungsspitzen und keine sehr kleinen Knickradien auftreten können.

Nach einer ersten Ausgestaltung der Erfindung ist vorgesehen, daß die Führungsketten mit dem Führungskernstück in einem deren Führung bildenden hohlzylindertopfartigen Kasten angeordnet sind. In einem solchen Kasten kann das als Platte ausgebildete Führungskernstück sich mit Distanzelementen an den Stirnwänden des Kastens abstützen. Durch geeignete Materialkombinationen zwischen dem Führungskernstück, den Führungsketten, den Distanzelementen und dem Kasten kann die Reibung der relativ zueinander bewegten Teile gering gehalten werden. Zum Beispiel kann der Kasten Gleitbeläge aus Polyamid aufweisen.

Nach einer weiteren Ausgestaltung der Erfindung kann der Kasten auch die Führung für den Meßkopf bilden. Insbesondere kann in der mittigen Öffnung des hohlzylindrischen Kastens eine als Träger für den Meßkopf dienende Büchse drehbar gelagert sein.

Im folgenden wird die Erfindung anhand einer ein Ausführungsbeispiel in schematischer Darstellung darstellenden Zeichnung näher erläutert. Im einzelnen zeigen :

Fig. 1    eine Wanddickenmeßvorrichtung in Seitenansicht,
Fig. 2    die Wanddickenmeßvorrichtung gemäß Fig. 1 in Aufsicht,
Fig. 3    den die Meß- und Versorgungsleitungen aufnehmenden und den Meßkopf führenden Teil der Wanddickenmeßvorrichtung gemäß Fig. 1 in Ansicht und

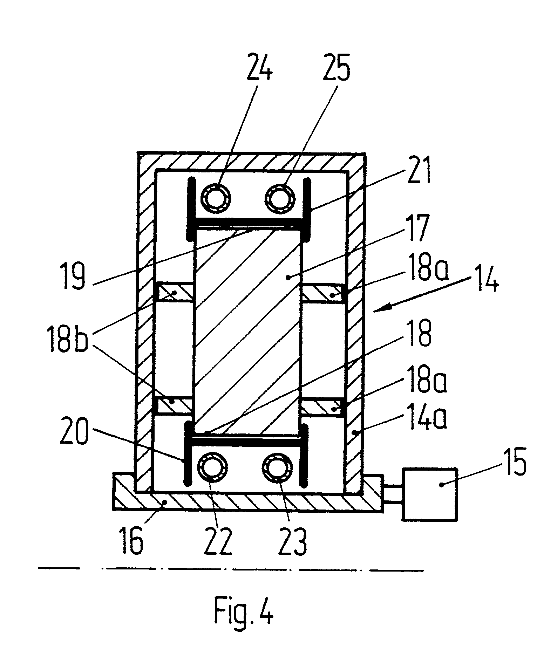

Fig. 4    den in Fig. 3 dargestellten Teil im halben Axialschnitt.

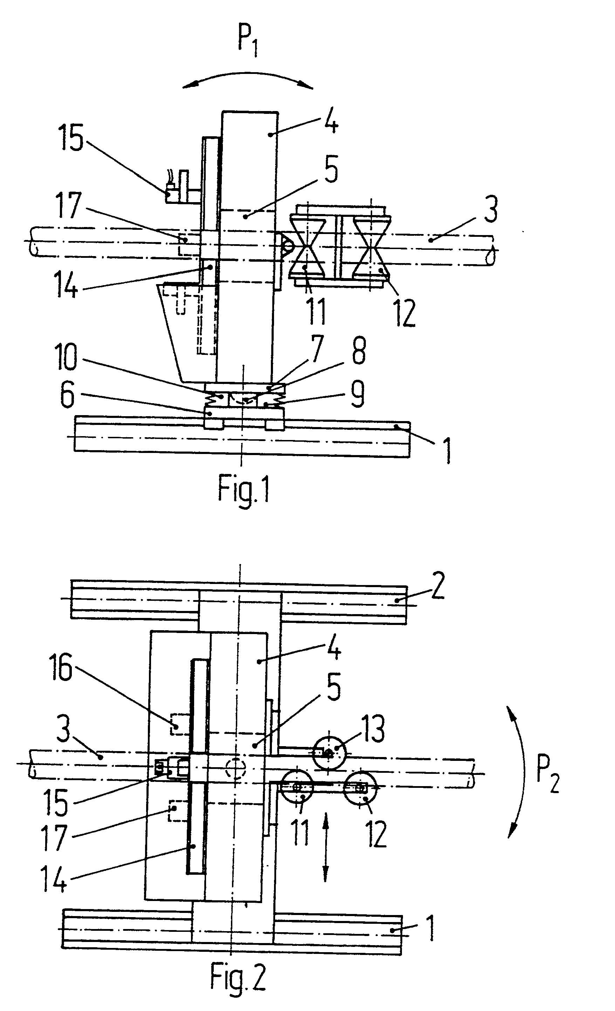

Die in Fig. 1 und 2 dargestellte Wanddickenmeßvorrichtung weist ein auf Schienen 1, 2 parallel zur Förderrichtung eines extrudierten Rohres 3 verfahrbares Gestell 4 mit einer Durchlauföffnung 5 für das Rohr 3 auf. Das Gestell 4 ist über ein zwischen Grundplatten 6, 7 angeordnetes Gelenklager 8 gegen die Kraft von zwischen den Grundplatten 6, 7 angeordneten Stützfedern 9, 10 in Richtung der Pfeile $P_1$, $P_2$ beweglich.

An der Einlaufseite des Rohres 3 des Gestells 4 trägt das Gestell 4 drei in Achsrichtung des Rohres 3 gegeneinander versetzte Kegelrollen 11-13, die das Rohr 3 zwischen sich einspannen. Die beiden Kegelrollen 11, 12 sind gegen das Rohr 3 anstellbar und dann starr feststellbar, während die Kegelrolle 13 gegen das Rohr anstellbar und dann federnd abgestützt ist.

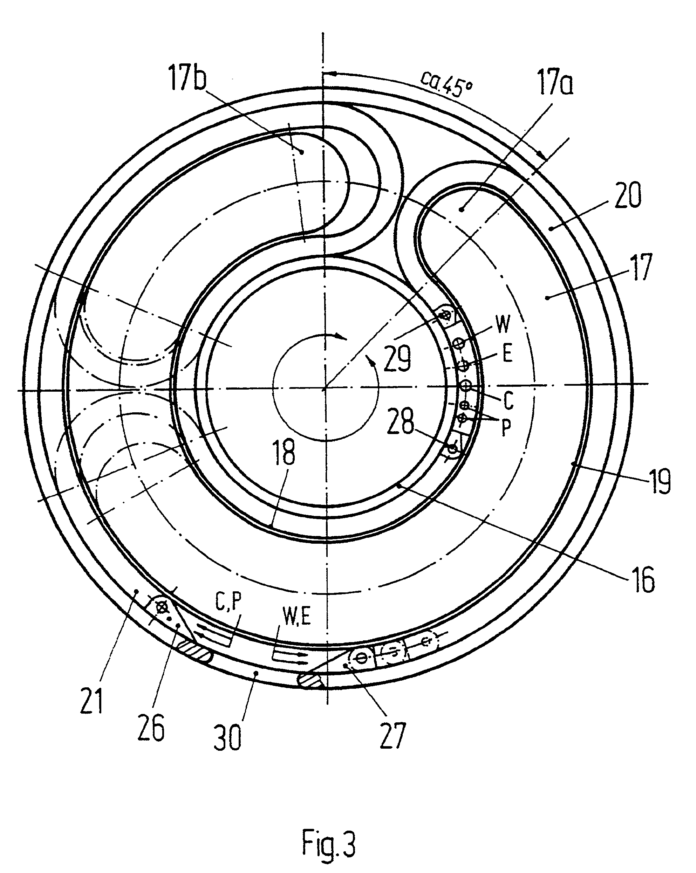

Das Gestell 4 trägt an der Auslaufseite einen flachen hohlzylindrischen Kasten 14, der einem reversierend umlaufenden Prüfkopf 15 und zu diesem Prüfkopf 15 führenden Meß- und Versorgungsleitungen 22-25 als Führung dient. In der mittigen Öffnung des hohlzylindrischen Kastens 14 ist eine Büchse 16 angeordnet, die auf dem als Führung dienenden Kasten 14 drehbar gelagert ist. Die Büchse 16 trägt den Meßkopf 15. In dem hohlzylindrischen Kasten 14 ist konzentrisch ein Führungskernstück 17 in Form eines plattenförmigen Kreisringabschnittes angeordnet, dessen Enden 17a, 17b abgerundet sind und das sich an den beiden Stirnwänden 14a, 14b des Kastens mit Distanzelementen 18a, 18b abstützt. Das Führungskernstück 17 bildet mit seinen inneren und äußeren Mantelflächen Führungsbahnen 18, 19 für zwei gegenläufig geführte führungsketten 20, 21 in denen die Meß- und Versorgungsleitungen 22-25 liegen. Während die außenliegenden Enden 26, 27 der beiden Führungsketten 20, 21 am Kasten 14 festgelegt sind, sind die inneren Enden 28, 29 der beiden Führungsketten 20, 21 zusammen mit den innenliegenden Enden W, E, C, P der Versorgungs- und Meßleitungen 22-25 für den Meßkopf 15 und dessen Stellorganen an der drehbeweglichen Büchse 16 befestigt. Für die in Fig. 3 nicht dargestellten Meß- und Versorgungsleitungen 22-25 ist im Bereich zwischen den außenliegenden Enden 26, 27 der Führungsketten 20, 21 im Kasten 14 eine Einführöffnung 30 vorgesehen. Die hier eingeführten Meß- und Versorgungsleitungen 22-25 werden auf die beiden gegenläufigen Führungsketten 20, 21 aufgeteilt.

Der reversierende Antrieb der Büchse 16 und damit auch des Meßkopfes 15 ist in der Zeichnung nicht dargestellt. Der Antrieb kann aber in an sich bekannter Weise mittels eines Riemenantriebes verwirklicht sein, der über eine an der Büchse 16 angesetzte Riemenscheibe läuft.

## Patentansprüche

1. Wanddickenmeßvorrichtung für Rohre (3), Kabelummantelungen und dergleichen, insbesondere aus extrudiertem Kunststoff, mit einem an Meß- und Versorgungsleitungen (22-25) angeschlossenen Meßkopf (15), der mittels einer an einem eine Durchlauföffnung (5) für das zu messende Rohr (3) aufweisenden Gestell (4) befestigten Führung (14) um die Durchlauföffnung (5) herum reversierend gelagert ist, **dadurch gekennzeichnet, daß** die Meß- und Versorgungsleitungen (22-25) in zwei Führungsketten (20, 21) untergebracht sind, die gegenläufig und jeweils zu einem Teil auf einer inneren Führungsbahn (18) und zum anderen Teil auf einer damit verbundenen äußeren Führungsbahn (19) geführt sind, daß die Führungsbahnen (18, 19) auf den inneren und äußeren Mantelflächen eines im wesentlichen die Form eines Kreisringabschnittes aufweisenden Führungskernstückes (17) ausgebildet sind, das konzentrisch zur Durchlauföffnung (4) angeordnet und um diese herum beweglich gelagert ist, und daß die Enden (26, 27) der auf der äußeren Führungsbahn (19) befindlichen Teile der Führungsketten (20, 21) an einem Festpunkt der Führung (14) und die Enden (28, 29) der auf der inneren Führungsbahn (18) befindlichen Teile der Führungsketten (20, 21) mit dem beweglichen Meßkopf (15) gekoppelt sind.

2. Wanddickenmeßvorrichtung nach Anspruch 1, **dadurch gekennzeichnet, daß** die Führungsketten (20, 21) mit dem Führungskernstück (17) in einem deren Führung bildenden flachen hohlzylindrischen Kasten (14) angeordnet sind.

3. Wanddickenmeßvorrichtung nach Anspruch 2, **dadurch gekennzeichnet, daß** das Führungskernstück (17) als Platte ausgebildet ist, das sich mit Distanzelementen (18a, 18b) an den Stirnwänden (14a, 14b) des Kastens (14) abstützt.

4. Wanddickenmeßvorrichtung nach Anspruch 2 oder 3, **dadurch gekennzeichnet, daß** der Kasten (14) die Führung für den Meßkopf (15) bildet.

5. Wanddickenmeßvorrichtung nach einem der Ansprüche 2 bis 4, **dadurch gekennzeichnet, daß** in der mittigen Öffnung des hohlzylindrischen Kastens (14) eine als Träger für den Meßkopf (15) dienende Büchse (16) drehbar gelagert ist.

**Claims**

1. A wall thickness measuring device for pipes (3), cable casings and the like, more particularly of extruded plastics, having a measuring head (15) which is connected to measuring and supply leads (22-25) and is mounted to reverse around an opening of passage (5) for the pipe (3) to be measured on a guide (14) attached to a frame (4) having the opening of passage (5), characterized in that the measuring and supply leads (22-25) are accommodated in two guide chains (20, 21) which extend in opposite directions, partly on an inner guideway (18) and the other part on an outer guideway (19) connected thereto ; the guideways (18, 19) are formed on the inner and outer generated surfaces of a guide core member which has substantially the shape of a portion of a circle and is disposed concentrically of the opening of passage (5) and is mounted for movement therearound ; and the ends (26, 27) of the parts of the guide chains (20, 21) disposed on the outer guideway (19) are coupled to a fixed point of the guide (14), the ends (28, 29) of the parts of the guide chains (20, 21) disposed on the inner guideway (18) being coupled to the movable measuring head (15).

2. A wall thickness measuring device according to claim 1, characterized in that the guide chains (20, 21) together with the guide core member (17) are disposed in a flat hollow cylindrical box (14) forming their guide.

3. A wall thickness measuring device according to claim 2, characterized in that the guide core member (17) takes the form of a plate bearing via spacing elements (18a, 18b) against the end walls (14a, 14b) of the box (14).

4. A wall thickness measuring device according to claims 2 or 3, characterized in that the box (14) forms the guide for the measuring head (15).

5. A wall thickness measuring device according to any of claims 2 to 4, characterized in that a bush (16) acting as a carrier for the measuring head (15) is rotatably mounted in the central aperture of the hollow cylindrical box (14).

**Revendications**

1. Dispositif de mesure de l'épaisseur d'une paroi pour des tubes (3), des enveloppes de câbles et similaires, en particulier en matière synthétique extrudée, avec une tête de mesure (15) raccordée à des conduits de mesure et d'alimentation (22, 25), qui est montée de manière réversible, au moyen d'un guidage (14) fixé sur un bâti (4) présentant une ouverture de passage (5) pour le tube (3) à mesurer, autour de l'ouverture de passage (5), caractérisé en ce que les conduits de mesure et d'alimentation (22, 25) sont disposés dans deux chaînes de guidage (20, 21) qui sont guidées en sens contraire et pour une partie sur un chemin de guidage interne (18) et pour l'autre partie sur un chemin de guidage externe (19) relié à celui-ci, que les chemins de guidage (18, 19) sont formés sur les surfaces d'enveloppe interne et externe d'un noyau de guidage (17) présentant pour l'essentiel la forme d'un segment d'anneau circulaire, qui est disposé concentrique à l'ouverture de passage (4) et est monté mobile autour de celle-ci, et que les extrémités (26, 27) des parties des chaînes de guidage (20, 21) se trouvant sur le chemin de guidage externe (19) sont accouplées à un point fixe du guidage (14) et les extrémités (28, 29) des parties des chaînes de guidage (20, 21) se trouvant sur le chemin de guidage interne (18) sont accouplées à la tête de mesure mobile (15).

2. Dispositif de mesure de l'épaisseur d'une paroi selon la revendication 1, caractérisé en ce que les chaînes de guidage (20, 21) sont disposées avec le noyau de guidage (17) dans un boîtier cylindrique creux (14) en forme de pot formant leur guidage.

3. Dispositif de mesure de l'épaisseur d'une paroi selon la revendication 2, caractérisé en ce que le noyau de guidage (17) est réalisé sous forme d'une plaque qui s'appuie aux parois frontales (14a, 14b) du boîtier (14) par l'intermédiaire d'éléments d'écartement (18a, 18b).

4. Dispositif de mesure de l'épaisseur d'une paroi selon la revendication 2 ou 3, caractérisé en ce que le boîtier (14) forme le guidage pour la tête de mesure (15).

5. Dispositif de mesure de l'épaisseur d'une paroi selon l'une des revendications 2 à 4, caractérisé en ce qu'une douille (16) servant de support pour la tête de mesure (15) est montée pivotante dans l'ouverture médiane du boîtier cylindrique creux (14).

Fig.1

Fig.2

Fig.3

Fig. 4